# EUROPEAN PATENT APPLICATION

(11) **EP 4 593 275 A1**
(43) Date of publication of application: **30.07.2025**
(21) Application number: 24153305.8
(22) Date of filing: 23.01.2024
(51) Int. Cl.: H02M 3/00, H02M 1/42, H02M 1/00, H05B 41/282

(54) **RESONANT HALF-BRIDGE CONVERTER AND METHOD OF OPERATING THE SAME**

(71) Applicant: Tridonic GmbH & Co. KG, 6851 Dornbirn (AT)
(72) Inventor: Kucera, Clemens, 6851 Dornbirn (AT); Saccavini, Lukas, 6851 Dornbirn (AT); Stark, Stefan, 6851 Dornbirn (AT); Schneider, Miguel Philipp, 6851 Dornbirn (AT); Romano, Fabio, 6851 Dornbirn (AT); Auer, Hans, 6851 Dornbirn (AT)
(74) Representative: Rupp, Christian

(57) **Abstract**

Disclosed is a resonant half-bridge converter *(1)* for a light-emitting diode, LED, light source *(2).* The converter *(1)* comprises a switching circuit *(101, 102),* comprising a high-side switch *(101)* and a low-side switch *(102)* connected in series, and being subjected to a rectified input voltage *(Vᵢₙ)* of the converter *(1)* with reference to a ground electric potential of the converter *(1).* The converter *(1)* further comprises a resonant tank circuit *(103, 104, 105),* connected between a common electric potential of the high-side switch *(101)* and the low-side switch *(102)* and the ground electric potential of the converter *(1),* and comprising a plurality of reactive circuit elements *(104, Lₛ, 103, Cₛ, 105, Cₚ).* The converter *(1)* further comprises a voltage sensing circuit *(106),* being arranged to sense a first voltage being indicative of an instantaneous value of the rectified input voltage *(Vᵢₙ)*. The converter *(1)* further comprises a current sensing circuit *(107),* being arranged to sense a second voltage being indicative of a resonant current *(Iᵣₑₛ)* of the resonant tank circuit *(103, 104, 105).* The converter *(1)* further comprises a control circuit *(108),* being arranged to improve a power factor of the converter *(1)* by controlling a duration of a conduction period of the high-side switch *(101)* to be twice a duration *(t_{d})* of a rise of the second voltage to a third voltage being indicative of a reference current *(I_{res,ref}),* wherein the third voltage is proportional to the first voltage.. This facilitates achievement of optimum power factor correction based on current-controlled resonant converters.

## Description

### Technical Field

The present disclosure relates generally to the field of lighting technology, and more particularly to a resonant half-bridge converter and a method of operating the same.

### Background Art

A resonant converter refers to a switching power supply wherein a switching bridge circuit generates a square-wave voltage that excites a resonant tank circuit to output a resonant sinusoidal current.

When using current-controlled resonant converters for power factor correction, a well-defined control of the switching bridge is required, in particular regarding the time instants when its switches are turned conductive and non-conductive, respectively, so as to achieve a phase match of the given input voltage and the resulting input current.

However, prior art in the field of current-controlled resonant converters does not seem to provide concrete guidance for achievement of optimum power factor correction.

### Summary

It is an object to overcome these and other drawbacks of the prior art.

The foregoing and other objects are achieved by the features of the independent claims. Further implementation forms are apparent from the dependent claims, the description and the figures.

According to a first aspect, a resonant half-bridge converter for a light-emitting diode, LED, light source is provided. The converter comprises a switching circuit, comprising a high-side switch and a low-side switch connected in series, and being subjected to a rectified input voltage of the converter with reference to a ground electric potential of the converter. The converter further comprises a resonant tank circuit, connected between a common electric potential of the high-side switch and the low-side switch and the ground electric potential of the converter, and comprising a plurality of reactive circuit elements. The converter further comprises a voltage sensing circuit, being arranged to sense a first voltage being indicative of an instantaneous value of the rectified input voltage. The converter further comprises a current sensing circuit, being arranged to sense a second voltage being indicative of a resonant current of the resonant tank circuit. The converter further comprises a control circuit, being arranged to improve a power factor of the converter by controlling a duration of a conduction period of the high-side switch to be twice a duration of a rise of the second voltage to a third voltage being indicative of a reference current, wherein the third voltage is proportional to the first voltage.

For improving a power factor of the converter by controlling a duration of a conduction period of the high-side switch to be twice a duration of a rise of the second voltage to a third voltage being indicative of a reference current, the control circuit may be arranged to switch the high-side switch conductive at a first time instant; measure a delay time between the first time instant and a second time instant when the second voltage crosses the third voltage; and switch the high-side switch non-conductive after a lapse of the time delay starting from the second time instant.

The control circuit may be arranged to determine the third voltage based on one of a lookup in a given table for values of the third voltage depending on the first voltage, an evaluation of a given function for values for the third voltage depending on the first voltage, a feedforward control of the third voltage depending on the first voltage, and a feedback control of the third voltage depending on the first voltage, the second voltage, and a relative phase of the first voltage and the second voltage.

The control circuit may further comprise a comparator, arranged to receive at its non-inverting input the second voltage and at its inverting input the third voltage; and the control circuit may further be arranged to determine the second time instant through a rising edge at an output of the comparator.

The control circuit may further comprise a counter; and the control circuit may be arranged to: increment a value of the counter in accordance with a fixed counting frequency during a low logic level at the output of the comparator; and decrement the value of the counter in accordance with the counting frequency during a high logic level at the output of the comparator. The control circuit may further be arranged to determine the lapse of the time delay starting from the second time instant through a transition of the counter to zero.

The converter may comprise a power factor correction, PFC, converter.

The converter may further comprise a transformer, comprising a primary-side inductance and a secondary-side inductance.

The resonant tank circuit may further comprise a parallel capacitance connected in parallel to the primary-side inductance.

The resonant tank circuit may further comprise a series capacitance and a series inductance connected in series between the common electric potential of the high-side switch and the low-side switch and a non-ground electric potential of the primary-side inductance.

According to a second aspect, a luminaire is provided, comprising a light-emitting diode, LED, light source and a converter of the first aspect for the LED light source.

According to a third aspect, a method of operating a resonant half-bridge converter is provided. The method comprises subjecting a switching circuit of the converter, comprising a high-side switch and a low-side switch connected in series, to a rectified input voltage of the converter with reference to a ground electric potential of the converter. The method further comprises sensing, by a voltage sensing circuit of the converter, a first voltage being indicative of an instantaneous value of the rectified input voltage. The method further comprises sensing, by a current sensing circuit of the converter, a second voltage being indicative of a resonant current of a resonant tank circuit of the converter, connected between a common electric potential of the high-side switch and the low-side switch and the ground electric potential of the converter. The method further comprises improving, by a control circuit of the converter, a power factor of the converter by controlling a duration of a conduction period of the high-side switch to be twice a duration of a rise of the second voltage to a third voltage being indicative of a reference current, wherein the third voltage is proportional to the first voltage.

### Advantageous Effects

The present disclosure facilitates achievement of optimum power factor correction based on current-controlled resonant converters, in particular LCC converters being operated in an inductive mode. Optimum power factor correction is achieved if an on-period of a switch of the switching circuit is set to be twice a time period between its turn-on and a threshold-crossing of a phase-lagging resonant current that emerges in response to the turn-on with respect to a proportionate input voltage.

The technical effects and advantages described above in relation with the converter equally apply to the method of operating the same having corresponding features.

### Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates a resonant half-bridge converter in accordance with the present disclosure;
- FIG. 2: illustrates waveforms emerging at an input/supply interface of a resonant half-bridge converter in accordance with the present disclosure; and
- FIG. 3: illustrates waveforms emerging within a resonant half-bridge converter in accordance with the present disclosure; and
- FIG. 4: illustrates a method of operating a resonant half-bridge converter in accordance with the present disclosure.

### Detailed Descriptions of Drawings

In the following description, reference is made to the accompanying drawings, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps, even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

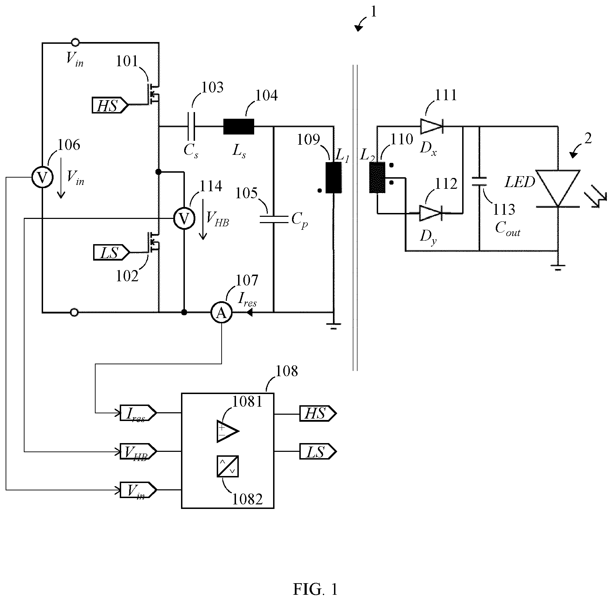

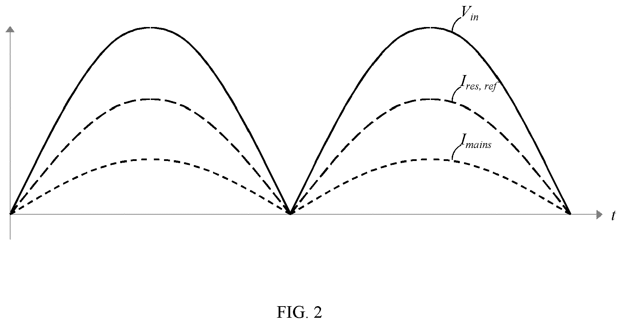

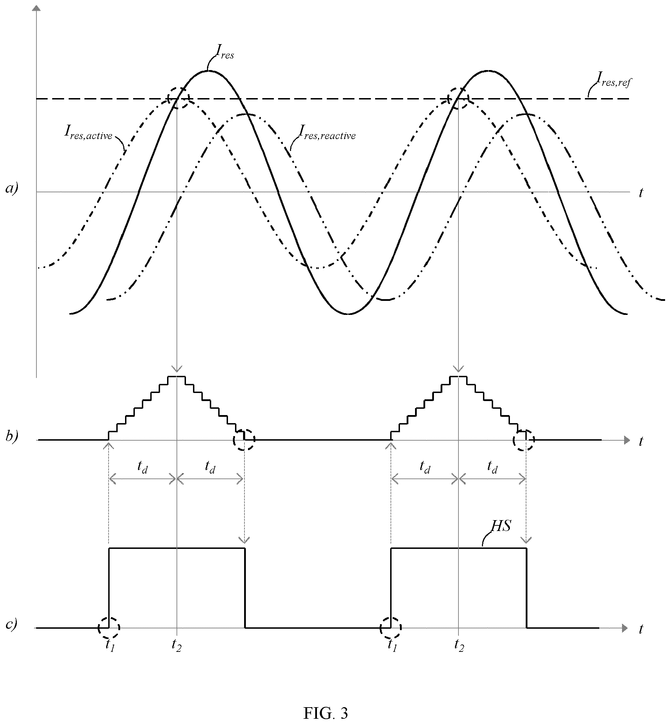

FIG. 1 illustrates a resonant half-bridge converter *1* in accordance with the present disclosure, FIG. 2 illustrates waveforms emerging at an input/supply interface of a resonant half-bridge converter *1* in accordance with the present disclosure; and FIG. 3 illustrates waveforms emerging within a resonant half-bridge converter in accordance with the present disclosure.

The converter *1* may form part of a luminaire *1, 2* as shown in FIG. 1, comprising a light-emitting diode, LED, light source 2 besides the converter *1.*

The converter *1* may in particular comprise a power factor correction, PFC, converter.

The converter *1* comprises a switching circuit *101, 102,* comprising a high-side switch *101* and a low-side switch *102* connected in series, i.e., a half-bridge switching circuit *101, 102.*

The switching circuit *101, 102* is subjected to a rectified input voltage *Vᵢₙ* of the converter *1* with reference to a ground electric potential of the converter *1*.

Time-variant waveforms of the rectified input voltage *Vᵢₙ* (solid line) and of a corresponding ideal input current *Iₘₐᵢₙₛ* (short dashed line) for maximizing a power factor are shown in FIG. 2.

The switching circuit 101, 102 has an output voltage node with a time-varying half-bridge voltage V_{HB}.

The converter *1* may further comprise a transformer *109, L₁, 110, L₂,* comprising a primary-side inductance *109, L₁* and a secondary-side inductance *110, L₂.*

The converter *1* further comprises a resonant tank circuit *103, 104, 105,* connected between a common electric potential of the high-side switch *101* and the low-side switch *102* and the ground electric potential of the converter *1,* and comprising a plurality of reactive circuit elements *104, Lₛ, 103, Cₛ, 105, Cₚ.*

More specifically, the resonant tank circuit *103, 104, 105* may comprise a parallel capacitance *105, Cₚ* connected in parallel to the primary-side inductance *109, L₁,* and may further comprise a series capacitance *103, Cₛ* and a series inductance *104, Lₛ* connected in series between the common electric potential of the high-side switch *101* and the low-side switch *102* and a non-ground electric potential of the primary-side inductance *109, L₁.*

The converter *1* further comprises a voltage sensing circuit *106,* being arranged to sense a first voltage being indicative of an instantaneous value of the rectified input voltage *Vᵢₙ*.

The converter *1* further comprises a current sensing circuit *107,* being arranged to sense a second voltage being indicative of a resonant current *Iᵣₑₛ* of the resonant tank circuit *103, 104, 105.* A time-variant waveform of the second voltage, viz., resonant current *Iᵣₑₛ,* is shown in FIG. 3a (solid line).

The converter *1* may further comprise a further voltage sensing circuit *114,* being arranged to sense a fourth voltage being indicative of an instantaneous value of the half-bridge voltage *V_{HB}.*

The converter *1* further comprises a control circuit *108,* whose operation will be explained in more detail below.

The converter *1* may further comprise rectifying diodes *111, Dₓ, 112, D_{y},* being arranged to perform a full-wave rectification of a current of the secondary-side inductance *110, L₂.*

The converter *1* may further comprise an output capacitor *113, Cₒᵤₜ*, being arranged to smoothen an output current of the converter *1*.

The control circuit 108 is arranged to improve a power factor of the converter *1* by controlling a duration of a conduction period of the high-side switch *101.*

To this end, the control circuit *108* may be arranged to receive the first voltage being indicative of an instantaneous value of the rectified input voltage *Vᵢₙ*, the second voltage being indicative of a resonant current *Iᵣₑₛ* of the resonant tank circuit *103, 104, 105,* the fourth voltage being indicative of the half-bridge voltage *V_{HB}* and may be arranged to drive the high-side switch *101* and a low-side switch *102* via drive signals HS (for the high-side switch *101*) and *LS* (for the low-side switch *102*), respectively.

The control circuit *108* may further be arranged to determine a third voltage being indicative of a reference current *I_{res,ref}* depending on the first voltage. In other words, the third voltage may be proportional to the first voltage and in turn to the rectified input voltage *Vᵢₙ*. A time-variant waveform of the third voltage, viz., resonant current threshold *Iᵣₑₛ, _{ref},* is shown in FIG. 2 (long dashed line).

In particular, the control circuit *108* may be arranged to determine the third voltage based on one of a lookup in a given table for values of the third voltage depending on the first voltage, an evaluation of a given function for values for the third voltage depending on the first voltage, a feedforward control of the third voltage depending on the first voltage, and a feedback control of the third voltage depending on the first voltage, the second voltage, and a relative phase of the first voltage and the second voltage.

For controlling the duration of the conduction period of the high-side switch *101,* the control circuit *108* may be arranged to carry out the following actions:
First, the control circuit *108* may be arranged to switch the high-side switch *101* conductive/on at a first time instant *t₁.* This time instant is indicated in FIG. 3c (see dashed circles).

Second, the control circuit *108* may be arranged to measure a delay time *t_{d}* between said first time instant *t₁* and a second time instant *t₂* when the second voltage crosses the third voltage. This time instant is indicated in FIG. 3a (see dashed circles).

The second time instant *t₂,* may be indicated through a rising edge at an output of a comparator *1081,* arranged to receive at its non-inverting input the second voltage and at its inverting input the third voltage.

To measure the delay time *t_{d}* between the first time instant *t₁* and the second time instant *t₂,* the control circuit *108* may be arranged to increment a value of a counter *1082* in accordance with a fixed counting frequency during a low logic level at the output of the comparator *1081.* In other words, as long as the second voltage being indicative of the resonant current *Iᵣₑₛ* is lower than the third voltage being indicative of the reference current *I_{res,ref},* the value of a counter *1082* is increased. An inclining staircase in FIG. 3b indicates such a counter increment of duration *t_{d}* between the first time instant *t₁* and the second time instant *t₂*.

Third, the control circuit *108* may be arranged to switch the high-side switch *101* non-conductive after a lapse of the time delay *t_{d}* starting from the second time instant *t₂*.

To determine the lapse of the time delay *t_{d}* starting from the second time instant *t₂,* the control circuit *108* may be arranged to decrement the value of the counter *1082* in accordance with the counting frequency during a high logic level at the output of the comparator *1081.* In other words, as soon as the second voltage being indicative of the resonant current *Iᵣₑₛ* is higher than the third voltage being indicative of the reference current *I_{res,ref},* the value of a counter *1082* is decreased. A declining staircase in FIG. 3b indicates such a counter decrement of duration *t_{d}* starting from the second time instant *t₂*. The lapse of the time delay *t_{d}* starting from the second time instant *t₂* is determined through a transition of the counter *1082* to zero. This time instant is indicated in FIG. 3b (see dashed circles).

At this point, the duration of the conduction period of the high-side switch 101 is twice the duration *t_{d}* of the rise of the second voltage to the third voltage.

Supposing that only a first harmonic of the resonant current *Iᵣₑₛ* is relevant, the resonant current *Iᵣₑₛ* lags behind the half-bridge voltage *V_{HB}* of the converter *1* in the inductive mode and consists of an active part *I_{res,active}* (dash-dot line in FIG. 3a) being in phase with the half-bridge voltage *V_{HB}* and a reactive part *I_{res,reactive}* (dash-dot-dot line in FIG. 3a) lagging 90° behind the half-bridge voltage *V_{HB}.* When the resonant current *Iᵣₑₛ* (i.e., second voltage) crosses its reference level *Iᵣₑₛ, _{ref}* (i.e., third voltage) proportional to the input voltage *Vᵢₙ* (i.e., first voltage) and the time delay *t_{d}* between this crossing and the switch-off of the high-side switch *101* is a quarter of a total switching period *T,* the level of the resonant current *Iᵣₑₛ* at the time *t₂* of the crossing is the peak of the active part of the resonant current *Iᵣₑₛ.* As the active part of the resonant current *Iᵣₑₛ* is proportional to the average input current over half of the switching period *T*, the input current is proportional to the input voltage as long as the reference level *Iᵣₑₛ, _{ref}* of the resonant current *Iᵣₑₛ* is proportional to the input voltage *Vᵢₙ* and the time delay *t_{d}* = T/4 is a quarter of the total switching period *T.*

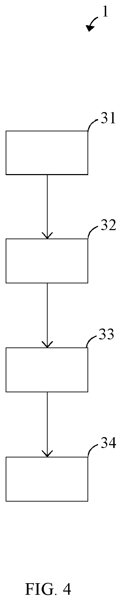

FIG. 4 illustrates a method 3 of operating a resonant half-bridge converter *1* in accordance with the present disclosure.

The method *3* comprises a step of subjecting *31* a switching circuit *101, 102* of the converter *1*, comprising a high-side switch *101* and a low-side switch *102* connected in series, to a rectified input voltage *Vᵢₙ* of the converter *1* with reference to a ground electric potential of the converter *1*.

The method *3* further comprises a step of sensing *32*, by a voltage sensing circuit *106* of the converter *1*, a first voltage being indicative of an instantaneous value of the rectified input voltage *Vᵢₙ*.

The method *3* further comprises a step of sensing *33*, by a current sensing circuit *107* of the converter *1*, a second voltage being indicative of a resonant current *Iᵣₑₛ* of a resonant tank circuit *103, 104, 105* of the converter *1*, connected between a common electric potential of the high-side switch *101* and the low-side switch *102* and the ground electric potential of the converter *1*.

The method *3* further comprises a step of improving *34*, by a control circuit *108* of the converter *1*, a power factor of the converter *1* by controlling a duration of a conduction period of the high-side switch *101* to be twice a duration *t_{d}* of a rise of the second voltage to a third voltage being indicative of a reference current *I_{res,ref},* wherein the third voltage is proportional to the first voltage.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A resonant half-bridge converter (1) for a light-emitting diode, LED, light source (2), comprising
- a switching circuit (101, 102), comprising a high-side switch (101) and a low-side switch (102) connected in series, and being subjected to a rectified input voltage *(Vᵢₙ)* of the converter (1) with reference to a ground electric potential of the converter (1);
- a resonant tank circuit (103, 104, 105), connected between a common electric potential of the high-side switch (101) and the low-side switch (102) and the ground electric potential of the converter (1), and comprising a plurality of reactive circuit elements *(104, Lₛ, 103, Cₛ, 105, Cₚ);*
- a voltage sensing circuit (106), being arranged to sense a first voltage being indicative of an instantaneous value of the rectified input voltage *(Vᵢₙ)*;
- a current sensing circuit (107), being arranged to sense a second voltage being indicative of a resonant current *(Iᵣₑₛ)* of the resonant tank circuit (103, 104, 105); and
- a control circuit (108), being arranged to improve a power factor of the converter (1) by controlling a duration of a conduction period of the high-side switch (101) to be twice a duration (*t_{d}*) of a rise of the second voltage to a third voltage indicative of a reference current *(I_{res,ref}),* wherein the third voltage is proportional to the first voltage.

2. The converter (1) of claim 1,
wherein for improving a power factor of the converter (1) by controlling a duration of a conduction period of the high-side switch (101) to be twice a duration (*t_{d}*) of a rise of the second voltage to a third voltage indicative of a reference current *(I_{res,ref}),* the control circuit (108) is arranged to: switch the high-side switch (101) conductive at a first time instant (*t₁*); measure a delay time *(t_{d})* between the first time instant (*t₁*) and a second time instant (*t₂*) when the second voltage crosses the third voltage; and switch the high-side switch (101) non-conductive after a lapse of the time delay *(t_{d})* starting from the second time instant (*t₂*).

3. The converter (1) of claim 2,
wherein the control circuit (108) is arranged to determine the third voltage based on one of
- a lookup in a given table for values of the third voltage depending on the first voltage,
- an evaluation of a given function for values for the third voltage depending on the first voltage,
- a feedforward control of the third voltage depending on the first voltage, and
- a feedback control of the third voltage depending on the first voltage, the second voltage, and a relative phase of the first voltage and the second voltage.

4. The converter (1) of claim 2 or claim 3,
wherein the control circuit (108) further comprises a comparator (1081), arranged to receive at its non-inverting input the second voltage and at its inverting input the third voltage; and
wherein the control circuit (108) is further arranged to determine the second time instant (*t₂*) through a rising edge at an output of the comparator (1081).

5. The converter (1) of claim 4,
wherein the control circuit (108) further comprises a counter (1082); and
wherein the control circuit (108) is arranged to: increment a value of the counter (1082) in accordance with a fixed counting frequency during a low logic level at the output of the comparator (1081); and decrement the value of the counter (1082) in accordance with the counting frequency during a high logic level at the output of the comparator (1081); and
wherein the control circuit (108) is further arranged to determine the lapse of the time delay *(t_{d})* starting from the second time instant (*t₂*) through a transition of the counter (1082) to zero.

6. The converter (1) of any one of the claims 1 - 5,
wherein the converter (1) comprises a power factor correction, PFC, converter.

7. The converter (1) of any one of the claims 1 - 6,
wherein the converter (1) further comprises a transformer *(109, L₁, 110, L₂*), comprising a primary-side inductance *(109, L₁)* and a secondary-side inductance *(110, L₂).*

8. The converter (1) of claim 7,
wherein the resonant tank circuit (103, 104, 105) further comprises a parallel capacitance *(105, Cₚ)* connected in parallel to the primary-side inductance *(109, L₁).*

9. The converter (1) of claim 7 or claim 8,
wherein the resonant tank circuit (103, 104, 105) further comprises a series capacitance *(103, Cₛ)* and a series inductance *(104, Lₛ)* connected in series between the common electric potential of the high-side switch (101) and the low-side switch (102), and a non-ground electric potential of the primary-side inductance *(109, L₁).*

10. A luminaire (1, 2), comprising
a light-emitting diode, LED, light source (2); and
a converter (1) of any one of the preceding claims for the LED light source (2).

11. A method (3) of operating a resonant half-bridge converter (1), the method (3) comprising
- subjecting (31) a switching circuit (101, 102) of the converter (1), comprising a high-side switch (101) and a low-side switch (102) connected in series, to a rectified input voltage *(Vᵢₙ)* of the converter (1) with reference to a ground electric potential of the converter (1);
- sensing (32), by a voltage sensing circuit (106) of the converter (1), a first voltage being indicative of an instantaneous value of the rectified input voltage *(Vᵢₙ)*;
- sensing (33), by a current sensing circuit (107) of the converter (1), a second voltage being indicative of a resonant current *(Iᵣₑₛ)* of a resonant tank circuit (103, 104, 105) of the converter (1), connected between a common electric potential of the high-side switch (101) and the low-side switch (102) and the ground electric potential of the converter (1); and
- improving (34), by a control circuit (108) of the converter (1), a power factor of the converter (1) by controlling a duration of a conduction period of the high-side switch (101) to be twice a duration *(t_{d})* of a rise of the second voltage to a third voltage being indicative of a reference current *(I_{res,ref}),* wherein the third voltage is proportional to the first voltage.
